# EUROPEAN PATENT APPLICATION

(11) **EP 4 586 070 A1**
(43) Date of publication of application: **16.07.2025**
(21) Application number: 24151762.2
(22) Date of filing: 15.01.2024
(51) Int. Cl.: G06F 3/12

(54) **A PRINTER AND A METHOD OF DISPLAYING AN IMAGE AT THE USER INTERFACE OF THE PRINTER**

(71) Applicant: Canon Production Printing Holding B.V., 5914 HH Venlo (NL)
(72) Inventor: PRIKANOWSKI, Robert H.H., Venlo (NL); VAN ROOIJEN, Antonius G., Venlo (NL)
(74) Representative: Canon Production Printing IP Department

(57) **Abstract**

The invention relates to sheet printer and a method for a sheet printer. The sheet printer comprises a media support plane, a print controller, a print head and a user interface comprising a preview window comprising a representation of the media support plane. The print controller is configured to receive at least one digital image intended to be printed on a media piece, to receive position information of the position of the media piece on the media support plane, to display a representation of the media piece in a preview window, to determine a first part of the at least one digital image which fits on the media piece when printed and a second part of the at least one digital image which does not fit on the media piece and will not be printed, and to display a representation the first part as an at least partial overlay on the presentation of the media piece according to at least one first visual parameter. The print controller is further configured to display a representation of the second part in the preview window according to at least one second visual parameter, which deviates from the at least one first visual parameter.

## Description

### FIELD OF THE INVENTION

The present invention relates to a sheet printer comprising a media support plane for placing or transporting media pieces to be printed upon, a print controller for receiving at least one digital image to be printed on a media piece having a media piece size and controlling the printing of the at least one digital image on the media piece, a print head configured to eject marking material on the media piece, and a user interface comprising a preview window comprising a representation of the media support plane, wherein the print controller is configured to receive at least one digital image intended to be printed on the media piece, the at least one digital image having an image size, to receive position information of the position of the media piece on the media support plane, to display a representation of the media piece in the preview window, to determine a first part of the at least one digital image which fits on the media piece when printed and a second part of the at least one digital image which does not fit on the media piece and will not be printed, and to display a representation the first part as on overlay on the representation of the media piece according to at least one first visual parameter.

The invention also relates to a method for said sheet printer.

The invention further relates to a non-transitory recording medium comprising computer executable program code configured to instruct a print controller of said sheet printer to perform the steps of the method according to the invention.

The media pieces may be sheets of paper or sheets of any other material or rigids of any kind of material. A printer according to the invention may be a flatbed printer. A printer which is configured to print on rolls of media only is not envisioned. However the present invention is also applicable to a hybrid printer which can print on both rolls and sheets or rigids.

The user of the printer according to the present invention may also be called operator hereinafter.

### BACKGROUND OF THE INVENTION

In case of a flatbed printer an operator may place pieces of media on the media support plane which is called flatbed area hereinafter, in order to print images from a plurality of print jobs on the pieces according to digital images which have been offered to the control unit by means of submitted print jobs. Positioning of a piece of media must be done very accurate with respect to its position and orientation. The operator usually measures right-angled distances of the piece of media from the edges of the flatbed area by a measuring tool like a measuring cord, a tape-measure or a ruler. The operator enters the measured distances by means of an application running on a computer connected to the control unit of the flatbed printer or on the print controller itself. After entering the distances, the operator selects the digital image to be printed on the piece of media and starts the printing of the flatbed printer. Therefore the print controller or the computer is provided with a user interface suitable for data entry in general.

Another method to position the media is to align the piece of media with reference rulers which have been printed on the flatbed area beforehand. Another usage of directly printing on the flatbed area may be for highlighting vacuum zones which are underneath the surface of the flatbed area so that the operator knows what areas to use, mask, or turn on or off. A vacuum zone is connected to a plurality of suction holes in the flatbed area.

Another method to position the media is to align the piece of media with registration pins that can be raised and lowered into the flatbed area.

A similar way of working may be used for hybrid printers which can print on rolls and rigids for example.

At the sheet printer it is possible to define the media on which a job is printed. This media might be smaller than the job or the job might be positioned by the user such that it does not fit entirely on the media. In this case only part of the job is printed and another part is not printed. Depending on the job structure, the not printed part might contain complete images (i.e. when using step and repeat of images or batch jobs).

In the printer world flatbed printers are known which have a user interface as described hereinabove. Literal feedback may be provided on the user interface about images extending outside of the media piece.

It is an object of the invention to improve the feedback given on the user interface of the sheet printer as described hereinabove.

### SUMMARY OF THE INVENTION

According to the present invention this object is achieved by the sheet printer according to claim 1. The print controller of the sheet printer is configured to display a representation of the second part in the preview window according to at least one second visual parameter, which deviates from the at least one first visual parameter.

By doing so, the operator can see the second part, i.e. the trimmer part of the job. Since the visuals of the second part deviate from the visuals of the first part the operator immediately recognises the second part and can distinguish the second part from the first part which is going to be printed on the media piece. The operator now can see at a glance which part of his job is not printed and can decide if this delivers a correctly printed image or not instead of first printing the at least one digital image and then deciding that it was not correctly printed and hence wasting media, ink and time.

According to an embodiment the print controller is configured to copy the image multiple times, wherein each copy inherits the dimensions of the media piece and the image position on the media piece.

According to an embodiment the print controller is configured to automatically fill the media piece with multiple copies of the at least one image.

According to an embodiment the second visual parameter determines a colour or hatching of the representation of the second part which deviates from a colour or hatching of the representation of the first part. For example, the second part which is not printed may be shown in a lighter colour (faded) such that the user can see immediately which part of the job is printed and which part is not printed.

The present invention also relates to a printing method for displaying at least one image on a user interface of a sheet printer comprising a media support plane for and transporting media pieces to be printed upon, a print controller for receiving at least one digital image to be printed on a media piece and controlling the printing of the at least one digital image on the media piece, a print head configured to eject marking material on the media piece, and the user interface comprising a preview window comprising a representation of the media support plane, wherein the method comprises the steps of
- receiving at least one digital image intended to be printed on the media piece, the at least one digital image having an image size,
- receiving position information of the position of the media piece on the media support plane,

- displaying a representation of the media piece in the preview window,
- determining a first part of the at least one digital image which fits on the media piece when printed and a second part of the at least one digital image which does not fit on the media piece and will not be printed, and
- displaying a representation of the first part as an at least partially overlay on the representation of the media piece according to at least one first visual parameter, characterized in that the method comprises the step of displaying a representation of the second part in the preview window according to at least one second visual parameter, which deviates from the at least one first visual parameter.

According to an embodiment the method comprises the step of automatically filling the media piece with multiple copies of the at least one image.

The present invention also relates to a non-transitory recording medium comprising computer executable program code configured to instruct a printer according to the present invention to perform the steps of the method according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: shows a printing system according to the present invention;
- Fig. 2: is a top view of the medium support plane area of the printing system in Fig. 1;
- Fig. 3 - 6: are user interface screens according to the present invention;
- Fig. 7: is a schematic diagram of an embodiment of the method according to the present invention; and
- Fig. 8: is a schematic diagram of the non-transitory recording medium according to the present invention.

### DETAILED DESCRIPTION OF EMBODIMENTS

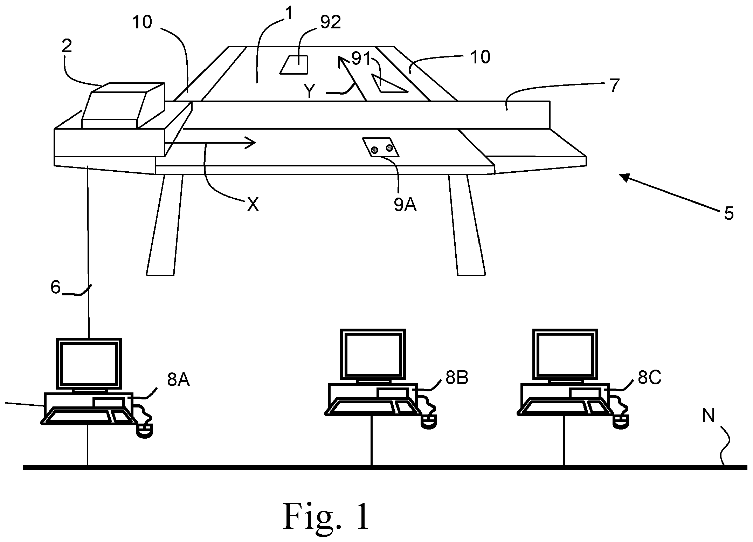

Fig. 1 is a print system 5 comprising a number of workstations 8B, 8C, which may be personal computers or other devices for preparing image data for prints to be printed. These workstations have access to a network N for transferring print jobs comprising the image data to a print controller 8A that is configured to receive the print jobs for prints and derive pass images or rasterized images. The print controller 8A may be part of the print system 5 connected to a print controller of the print system 5 via a connection 6.

In Fig. 1 the sheet printer is a flatbed printer. However, a hybrid printer which is capable to print on rolls and sheets or rigids may also be envisioned. The printing system 5 as shown in Fig. 1 comprises a print head 2 attached to an armature 7 for applying colorants, for example cyan (C), magenta (M), yellow (Y), black (K) and white (W) colorant, or varnish to pieces 91, 92, 9A of flat print media placed on a medium support area 1 - which will be called a flatbed area hereinafter in case of a flatbed printer - in order to obtain a printed image. The armature 7 may be a gantry above the flatbed area 1 as shown in Fig. 1 or a robot arm (not shown) moving in a plurality of directions over the flatbed area 1. The flatbed area 1 is the surface of the flatbed which is at least partially printable by the print head 2. The pieces of media may be so small that they are completely placed on the flatbed area 1, but a piece of media which is larger than the flatbed area, in which case an image which is going to cover the whole piece of media must be printed into a plurality of parts of the image, is not excluded. A first piece 9A has already been printed upon, while the other pieces 91, 92 are not provided with any marking material yet. The print head 2 reciprocally scans the flatbed area 1 in the second direction X along a gantry 7 perpendicular to a first direction Y of the gantry 7 over the flatbed area 1 along guiding parts 10. During printing of an image on the piece 91, 92, 9A of media, the piece 91, 92, 9A of media is not moved on the flatbed area 1. This way of working is advantageous for rigid print media. A print head which is as wide as the flatbed area may also be envisaged within the scope of the invention. Such a print head may be moveable in at least one direction over the flatbed area 1. The pieces of media 9A, 91, 92 may have a thickness of 50 mm.

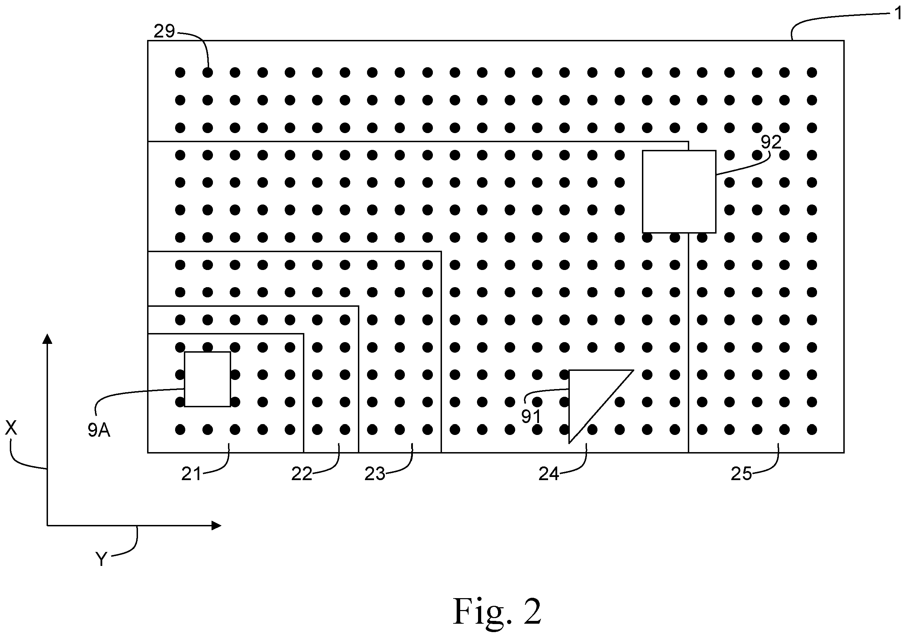

Fig. 2 shows the flatbed area 1 of Fig.1 from a different viewpoint. The flatbed area 1 is provided with a plurality of suction holes 29. A suction hole 29 is connected to at least one underlying suction chamber 21 - 25. The suction chambers 21 - 25 may be closed and opened separately in order to limit and/or expand the air flow to an air flow which is necessary and corresponding to the positions of the media pieces 91, 92, 9A on the flatbed area 1. The number of suction holes, the number of suction chambers, the size of the suction holes, the size of the suction chambers, the geometry of the suction holes and the geometry of the suction chambers in Fig. 2 are exemplary. Other numbers, sizes or geometries may be envisioned.

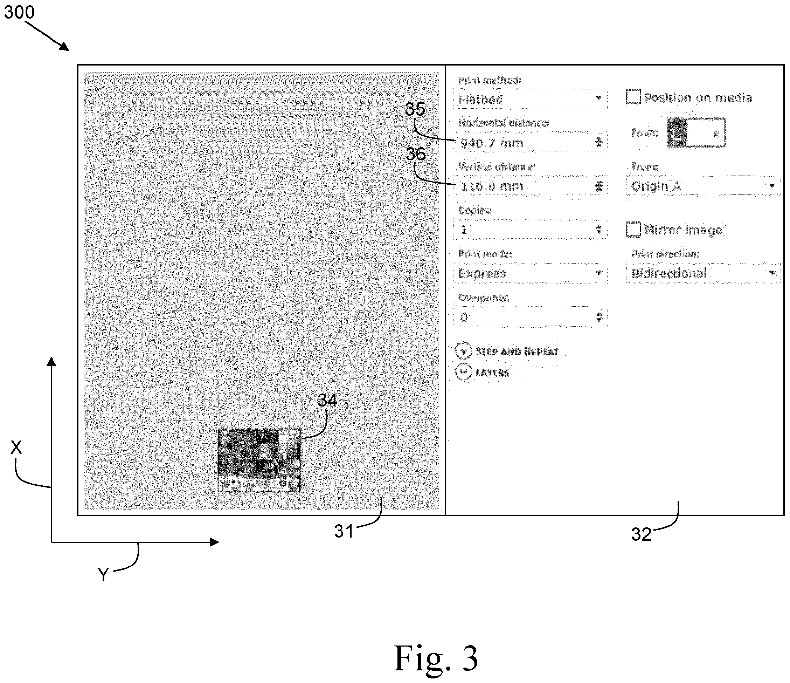

When a print job comprising at least one image to be printed is submitted to the sheet printer according to the present invention, the print controller adds the print job and the at least one image to a pool of images (not shown) to be printed. The pool is shown in an initial user interface screen and may be organized as a print queue or as a grouping mechanism to create a container print job with a container image that comprise the images which can be printed in one go of printing on at least one media piece laid down on the medium support plane. An image from the pool can be selected in order to display the user interface screens as shown in Fig. 3-6. From the user interface screens as shown in Fig. 3-6, the user can return to the initial user interface screen (not shown), for example to select a next image which printing is to be specified in the user interface screens in Fig. 3 - 6.

According to another embodiment the user interface screens in Fig. 3 - 6 are integrated as a sub-screen in the initial user interface screen of the user interface of the sheet printer. When no print job or image is selected, a placeholder text may be displayed in the sub-screen. A selected image in the pool part of the initial user interface screen is then directly visible in the sub-screen, i.e. in the preview window of the sub-screen.

Fig. 3 - 6 are user interface screens according to the invention. For convenience reasons, representations of an image to be printed and a media piece to be printed upon which are visible on the preview window 31 comprised in the user interface screens in Fig. 3 - 6 are hereinafter referred to as "image" and "media piece" respectively.

Fig. 3 is a user interface screen 300 comprising the preview window 31 and a parameter window 32 for manual entrance of values of parameters concerning the position of the media piece and concerning the position of the print job image(s). An image 34 is positioned on the grey colour medium support plane according to a horizontal distance 35 and a vertical distance 36 from Origin A which is the bottom-left corner of the grey colour medium support plane area in the preview window 31.

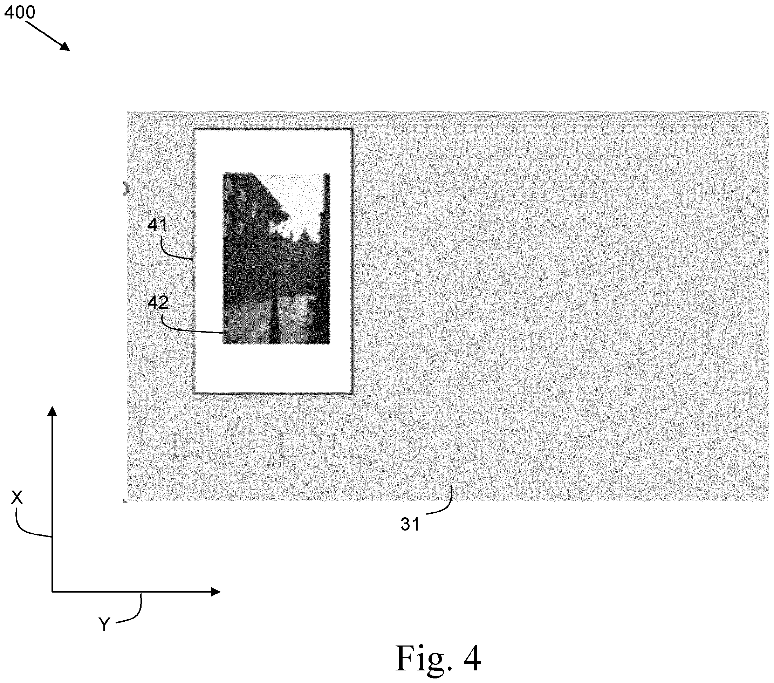

Fig. 4 zooms in at the preview window 31 of Fig. 3. In this first example 400 a digital image 42 is shown on a media piece 41. The digital image 42 fits on the media piece 41. The digital image 42 can be printed on the media piece 41 without any problems.

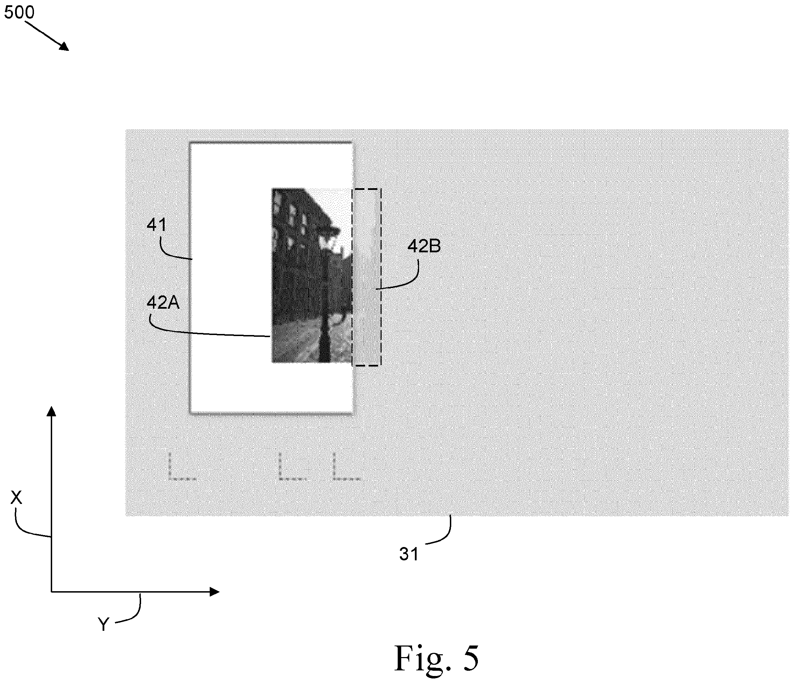

Fig. 5 shows again the preview window 31 of Fig. 3. In this second example 500 the digital image 42 is shifted in the Y direction. The digital image 42 has been trimmed off at the right side of the media piece 41. A first part 42A of the digital image 42 can be printed on the media piece 41. A second part 42B of the digital image 42 which cannot be printed on the media piece 41 is visible in the preview window 31. The second part 42B is shown in a lighter colour than the first part 42B in order to let the operator easily distinguish the part 42A of the digital image 42 which can be printed on the media piece 41 from the part 42B of the digital image 42 which cannot be printed on the media piece 41.

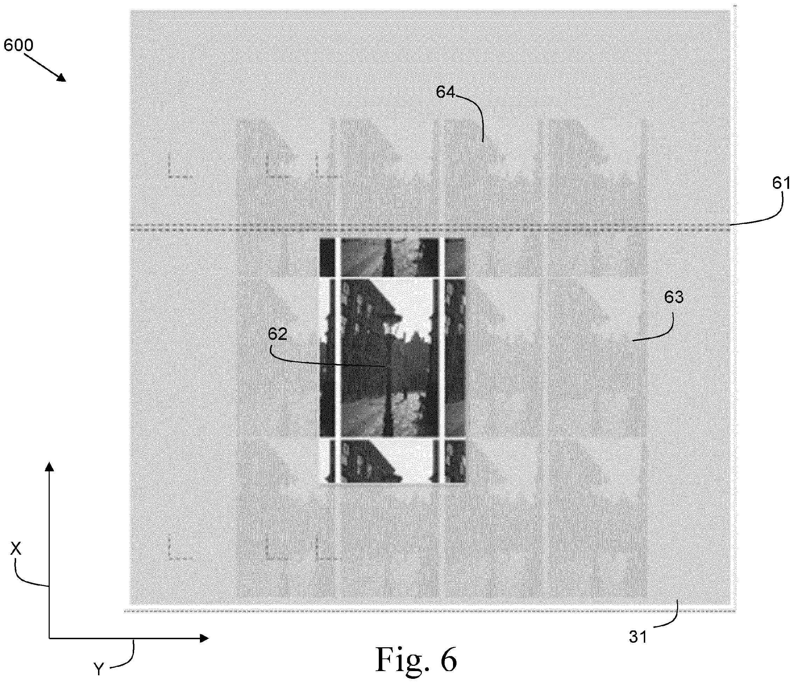

Fig. 6 shows again the preview window 31 of Fig. 3. I this third example 600 a print job is shown where complete images comprised in the print job have been trimmed off. The print job comprises a plurality of digital images (12). Only one of the digital images indicated by reference number 62 can be printed completely on the media piece. The other images 63, 64 cannot be completely or entirely printed on the media piece. Moreover, some images 64 of the print job are virtually positioned outside of the media support plane area which border is indicated by the double dashed line 61 in Fig. 6. The operator may decide to place a larger media piece on the media support plane in order to get more image of the plurality of images printed on the media piece. On the other hand , the operator may decide to place a smaller media piece on the media support plane in order to get precisely only the one image 62 printed on the media piece.

By displaying the non-printed parts 42B, 63, 64 of the digital images which are part of the print job, the operator in an early stage can decide what action is to be done in order to get a correct and intended print output. The inventors have recognised that displaying the non-printed parts at the preview window 31 will actually lead to less waste of print media, less waste of marking material like ink, and less operator time.

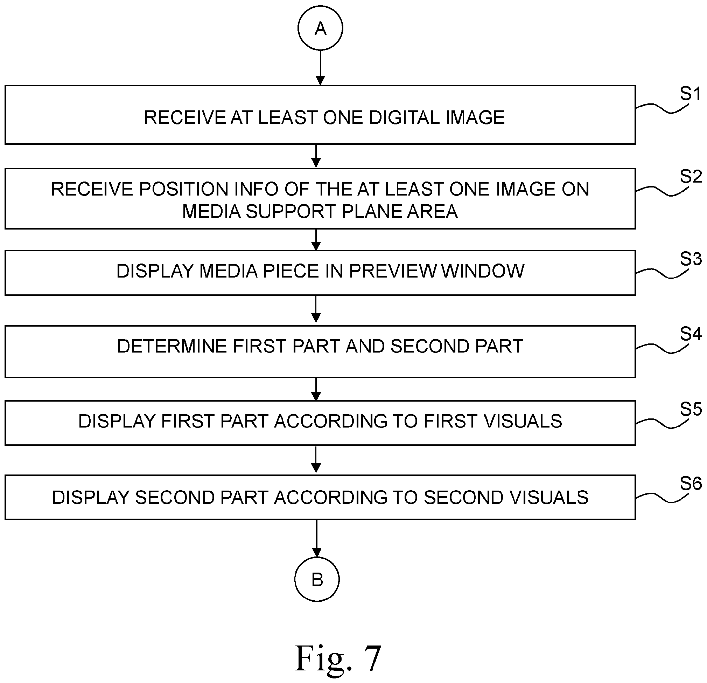

Fig. 7 is a flow diagram of an embodiment of the method according to the invention. Starting point of the method is point A. Point A leads to a first step S1.

In the first step S1 the print controller receives at least one digital image intended to be printed on the media piece. The at least one digital image has an image size defined by a width and a length. The at least one digital image is comprised in a print job with print job settings.

In a second step S2 the print controller receives position information of the position of the media piece on the media support plane. Thereto the parameter window 32 shown in Fig. 3 may be used by the operator to enter relevant position values.

In a third step S3 a representation of the media piece is displayed in the preview window.

In a fourth step S4 a first part of the at least one digital image is determined which fits on the media piece when printed and a second part of the at least one digital image which does not fit on the media piece and will not be printed. The determination is based on the position of the media piece on the media support plane and the position and size of the print job placed in the representation of the media support plane in the preview window according to the present invention.

In a fifth step S5 a representation of the first part is displayed as an at least partially overlay on the representation of the media piece according to at least one first visual parameter.

In a sixth step S6 a representation of the second part is displayed in the preview window according to at least one second visual parameter, which deviates from the at least one first visual parameter.

The method ends in an end point B.

The user interface is also configured (not shown) to receive a start instruction for printing the image on the media piece by the sheet printer. The print controller uses the values of the parameters set in the parameter window to create a data bitmap and print instructions to be sent to the print head. The print head ejects the marking material to form the image on the media piece at the entered and previewed position on the media piece and the media support plane according to the data bitmap.

According to an embodiment the print controller gets feedback from via the user interface of the printing system or via detection by sensors of the printing system that the media pieces have been laid down on the media support plane, before the marking material is ejected towards the media support plane. The ejection of marking material may be started automatically by the print controller or manually via the user interface by the operator.

Fig. 3 - 6 are user interface screen 300, 400, 500, 600 of the user interface of the printer according to the present invention. The user interface may be a local user interface attached to the sheet printer. The user interface may be a remote user interface installed in storage or as a cloud service on a computer, PC, laptop, tablet pc, mobile phone, or any other mobile device with a display screen connected - wired or wireless - to the print controller of the sheet printer according to the present invention.

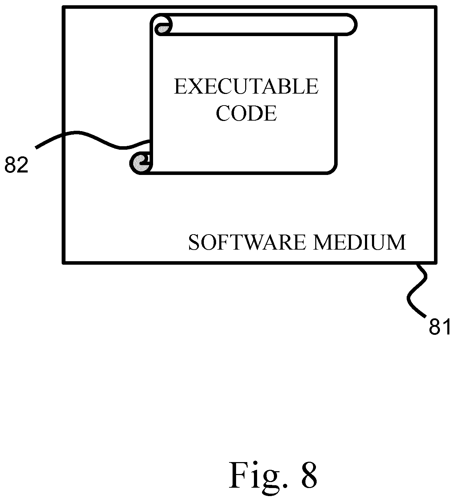

Fig. 8 schematically shows a non-transitory software medium 81 according to the invention. The software medium 81 comprises executable code 82 configured to, when executed, perform the method according to the invention, e.g. as described with respect to either the sheet printer shown in Fig. 1, the user interface screens shown in

Fig. 3 - 6 or the method shown in Fig. 7 and/or according to any of the variants and modifications of the printer and/or of the method described hereinbefore.

The non-transitory software medium 81 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

The skilled person will recognise that other embodiments are possible within the scope of the appended claims.

## Claims

1. A sheet printer comprising
- a media support plane for placing or transporting media pieces to be printed upon,
- a print controller for receiving at least one digital image to be printed on a media piece having a media piece size and controlling the printing of the at least one digital image on the media piece,
- a print head configured to eject marking material on the media piece, and
- a user interface comprising a preview window comprising a representation of the media support plane,
wherein
the print controller is configured
to receive at least one digital image intended to be printed on the media piece, the at least one digital image having an image size,
to receive position information of the position of the media piece on the media support plane,
to display a representation of the media piece in the preview window,
to determine a first part of the at least one digital image which fits on the media piece when printed and a second part of the at least one digital image which does not fit on the media piece and will not be printed, and
to display a representation the first part as on overlay on the representation of the media piece according to at least one first visual parameter,
**characterized in that** the print controller is configured to display a representation of the second part in the preview window according to at least one second visual parameter, which deviates from the at least one first visual parameter.

2. A sheet printer according to any of the preceding claims, wherein the print controller is configured to copy the image multiple times, wherein each copy inherits the dimensions of the media piece and the image position on the media piece.

3. A sheet printer according to any of the preceding claims, wherein the print controller is configured to automatically fill the media piece with multiple copies of the at least one image.

4. A sheet printer according to any of the preceding claims, wherein the second visual parameter determines a colour or hatching of the representation of the second part which deviates from a colour or hatching of the representation of the first part.

5. A sheet printer according to any of the preceding claims, wherein the sheet printer is a flatbed printer and the media support plane is a flatbed area.

6. A sheet printer according to any of the preceding claims wherein the sheet printer is a hybrid printer which is configured to print on sheets and rolls.

7. Printing method for displaying at least one image on a user interface of a sheet printer comprising a media support plane for and transporting media pieces to be printed upon, a print controller for receiving at least one digital image to be printed on a media piece and controlling the printing of the at least one digital image on the media piece, a print head configured to eject marking material on the media piece, and the user interface comprising a preview window comprising a representation of the media support plane,
wherein the method comprises the steps of
- receiving at least one digital image intended to be printed on the media piece, the at least one digital image having an image size,
- receiving position information of the position of the media piece on the media support plane,
- displaying a representation of the media piece in the preview window,
- determining a first part of the at least one digital image which fits on the media piece when printed and a second part of the at least one digital image which does not fit on the media piece and will not be printed, and
- displaying a representation of the first part as an at least partially overlay on the representation of the media piece according to at least one first visual parameter, **characterized in that** the method comprises the step of displaying a representation of the second part in the preview window according to at least one second visual parameter, which deviates from the at least one first visual parameter.

8. Method according to claim 7, wherein the method comprises the step of automatically filling the media piece with multiple copies of the at least one image.

9. Non-transitory recording medium comprising computer executable program code configured to instruct a sheet printer according to any of the claims 1 - 6 to perform the method according to any of the claims 7 - 8.
